(19) Europäisches Patentamt / European Patent Office / Office européen des brevets

(11) **EP 3 577 421 B1**

(12) **EUROPÄISCHE PATENTSCHRIFT**

(45) Veröffentlichungstag und Bekanntmachung des Hinweises auf die Patenterteilung:
**20.10.2021  Patentblatt 2021/42**

(21) Anmeldenummer: **18702450.0**

(22) Anmeldetag: **24.01.2018**

(51) Int Cl.:
***G01D 5/244*** *(2006.01)*

(86) Internationale Anmeldenummer:
**PCT/EP2018/051706**

(87) Internationale Veröffentlichungsnummer:
**WO 2018/141602 (09.08.2018 Gazette 2018/32)**

(54) **SENSOREINRICHTUNG ZUR ERFASSUNG DER DREHLAGE EINER SICH DREHENDEN WELLE MIT ULTRASCHALLVERSCHWEISSTEM GEBERMAGNETEN**

SENSOR DEVICE FOR CAPTURING THE ROTATIONAL POSITION OF A ROTATING SHAFT WITH ULTRASONICALLY WELDED ENCODER MAGNETS

SYSTEME DETECTEUR POUR LA DETECTION DE LA POSITION DE ROTATION D'UN ARBRE ROTATIF AVEC UN AIMANT DE CODAGE SOUDÉ PAR ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2017   DE 102017000850**

(43) Veröffentlichungstag der Anmeldung:
**11.12.2019   Patentblatt 2019/50**

(73) Patentinhaber:
• **thyssenkrupp Presta AG**
  **9492 Eschen (LI)**
• **thyssenkrupp AG**
  **45143 Essen (DE)**

(72) Erfinder: **RAUCH, Albert**
  **6824 Schlins (AT)**

(74) Vertreter: **thyssenkrupp Intellectual Property GmbH**
  **ThyssenKrupp Allee 1**
  **45143 Essen (DE)**

(56) Entgegenhaltungen:
**EP-A2- 2 594 915          EP-B1- 2 350 573
DE-A1-102007 050 258    DE-A1-102013 015 452
DE-A1-102013 212 324    DE-A1-102014 018 783**

**Beschreibung**

Die vorliegende Erfindung betrifft eine Sensoreinrichtung zur Erfassung der Drehlage einer sich drehenden Welle mit den Merkmalen des Oberbegriffs des Anspruchs 1, ein Verfahren zur Montage einer solchen Sensoreinrichtung mit den Merkmalen des Oberbegriffs des Anspruchs 8 und eine elektromechanische Servolenkung.

Sensoreinrichtungen zur Erfassung der Drehlage einer sich drehenden Welle weisen herkömmlicherweise Ringmagnete auf, die beispielsweise als Motormagnete eingesetzt werden, wobei der Grundkörper, der den Magneten hält, mit Presssitz auf einer Motorwelle befestigt ist. Dabei sollen möglichst keine mechanischen Spannungen auf den Ringmagneten übertragen werden, sodass dieser vom Grundkörper nicht abreißen oder losbrechen kann. Der Einsatz von Ringmagneten als Motormagneten macht es erforderlich, dass eine Verdrehsicherheit und axiale Verschiebesicherheit gewährleistet ist. Es sind kraft-oder formschlüssige Verbindungen gefordert, denn Klebeverbindungen garantieren keine dauerhaft sichere Befestigung.

Aus der EP 2 350 573 B1 ist eine Sensoreinrichtung zur Erfassung der Drehlage einer sich drehenden Welle bekannt, die einen ringförmig ausgebildeten Gebermagneten aufweist, der auf einem Trägerstift sitzt, wobei der Gebermagnet als Spritzgussbauteil ausgeführt ist und an den Trägerstift angespritzt ist. Weiterhin ist vorgesehen, dass ein Formschluss durch radiale Vertiefungen und in die Vertiefungen einragende radiale Erhebungen zwischen dem Trägerstift und dem Gebermagneten gebildet wird. Dadurch lässt sich eine besonders gute Verbindung zwischen dem Trägerstift und dem Gebermagneten herstellen. Nachteilig ist jedoch der hohe Aufwand durch die erforderlichen Spritzgusswerkzeuge, insbesondere auch bei einer Anpassung an unterschiedliche Abmessungen und Anwendungen. Aus der DE 10 2014 018783 A1, der DE 10 2013 015452 A1 und der EP 2 594 915 A2 sind Gebermagneten für eine Sensoreinrichtung bekannt, die mittels Ultraschallschweißen an einer Welle befestigt werden.

Es ist Aufgabe der vorliegenden Erfindung eine Sensoreinrichtung zur Erfassung der Drehlage einer sich drehenden Welle anzugeben, die eine einfachere verdrehsichere Verbindung zwischen dem Ringmagneten und einem den Ringmagneten tragenden Grundkörper ermöglicht.

Diese Aufgabe wird von einer Sensoreinrichtung zur Erfassung der Drehlage einer sich drehenden Welle mit den Merkmalen des Anspruchs 1 und von einem Verfahren zur Montage einer solchen Sensoreinrichtung mit den Merkmalen des Anspruchs 5 sowie einer elektromechanischen Servolenkung mit den Merkmalen der Ansprüche 10 und 11 gelöst.

Demnach ist eine Sensoreinrichtung zum Erfassen der Drehlage einer rotierenden Welle vorgesehen, die in einem Gehäuse drehbar gelagert ist, mit einem Gebermagneten, der auf einem Trägerteil befestigt ist, das mit der Welle verbunden ist, wobei das Trägerteil ein Trägerstift ist und der Gebermagnet ringförmig ausgebildet ist und den Trägerstift umschließt, wobei der Gebermagnet eine zentrale Ausnehmung aufweist, die zumindest teilweise kleiner als der Außendurchmesser des Trägerteils ist und das Trägerteil in die Ausnehmung des Gebermagneten eingesetzt ist und mittels Einpressen und Ultraschallschweißen stoff- und formschlüssig verbunden ist. Durch das Ultraschallschweißen wird eine sichere Verbindung zwischen dem Trägerteil und dem Gebermagneten geschaffen.

Die Verbindung ist stoff- und formschlüssig. Es ist bevorzugt, wenn das Trägerteil als Sonotrode während des Ultraschallschweißens fungiert.

Erfindungsgemäß ist das Trägerteil ein Trägerstift.

Dabei ist der Gebermagnet ringförmig ausgebildet und umschließt den Trägerstift.

Vorzugsweise weist das Trägerteil auf der Außenseite eine Rändelung auf. Diese Rändelung kann zum Beispiel eine Kreuz- oder Längsrändelung sein. Weiterhin kann die Rändelung als Gerad-und/oder Quer- und/oder Schrägrändelung ausgebildet sein, hierdurch wird die Verbindung zwischen dem Gebermagneten und dem Trägerstift verbessert.

Weiterhin ist ein Verfahren zur Montage einer Sensoreinrichtung zum Erfassen der Drehlage einer rotierenden Welle, die in einem Gehäuse drehbar gelagert ist, mit einem Gebermagneten, der auf einem Trägerteil, welches ein Trägerstift ist, befestigbar ist, das mit der Welle verbindbar ist, vorgesehen, wobei der Gebermagnet ringförmig ausgebildet ist und den Trägerstift umschließt, wobei das Verfahren folgende Schritte aufweist:

- Teilweises Einbringen des Trägerteils in eine zentrale Ausnehmung des Gebermagneten, die zumindest teilweise kleiner als der Außendurchmesser des Trägerstiftes ist, mit einem definierten Anpressdruck, derart, dass der Trägerstift in die zentrale Ausnehmung einsinkt und sich dadurch mit dem Gebermagneten (13) stoff- und formschlüssig verbindet,
- Einleiten einer hochfrequenten mechanischen Schwingung im Ultraschallbereich in das Trägerteil,
- Einpressen des Trägerteils in den Gebermagneten mit einem definierten Anpressdruck, das vorzugsweise vollständig erfolgt,
- Einbringen des Trägerteils in die Welle.

Bevorzugt liegt die hochfrequente Schwingung in einem Bereich von 20 bis 40 kHz, insbesondere bei etwa 35 kHz.

Es ist weiterhin bevorzugt, wenn der Gebermagnet in seiner Zusammensetzung Kunststoff aufweist und bei dem Einleiten der hochfrequenten mechanischen Schwingung in das Trägerteil teilweise erwärmt und plastifiziert wird.

Erfindungsgemäß ist das Trägerteil ein Trägerstift. Dabei ist der Gebermagnet ringförmig ausgebildet und umschließt den Trägerstift.

Vorzugsweise weist das Trägerteil auf der Außenseite eine Rändelung auf, so dass der plastifizierte Gebermagnet beim vollständigen Einpressen des Trägerteils in den Gebermagneten Hinterschneidungen der Rändelung umfließt. Nach dem Abkühlen entsteht so eine form- und stoffschlüssige Verbindung zwischen dem Magneten und dem Trägerstift.

Der Ringmagnet kann eine zentrale Ausnehmung aufweisen, bevorzugt eine kreisrunde Öffnung oder Bohrung, in welcher ein Verbindungsabschnitt des Trägerteils festgelegt ist. Der Innendurchmesser der Ausnehmung kann zumindest abschnittweise kleiner ausgestaltet sein kann als der Außendurchmesser im Verbindungsabschnitt des Trägerteils, welches als Trägerstift ausgebildet sein kann. Der Ringmagnet hat in Achsrichtung eine Breite, die der axialen Erstreckung der Ausnehmung entspricht, mit welcher er im Bereich seines Verbindungsabschnitts auf dem Trägerstift sitzt.

In dem Verbindungsabschnitt kann das Trägerteil eine Verdickung aufweisen, die einen größeren Außendurchmesser aufweist, als der Innendurchmesser der Ausnehmung. Bevorzugt erstreckt sich die Verdickung in axialer Richtung über einen Teilabschnitt des Verbindungsabschnitts, mit anderen Worten ist die Breite der Verdickung kleiner als die Breite des Ringmagnets.

Bevorzugt beträgt die Breite der Verdickung, in axialer Richtung gemessen, zwischen 10 und 80% der Breite des Ringmagnets, besonders bevorzugt zwischen 30 und 50%.

Der Außendurchmesser des Trägerstifts in dem Verbindungsabschnitt ist außerhalb der Verdickung bevorzugt kleiner als der Innendurchmesser der Ausnehmung. Das Durchmesserspiel ist dabei so bemessen, dass der Trägerstift mit dem Verbindungsabschnitt verformungsfrei in die Ausnehmung axial eingeführt werden kann. Im Bereich der Verdickung ist der Durchmesser größer oder gleich dem Innendurchmesser der Ausnehmung, so dass beim Einbringen des Verbindungsabschnitts in die Ausnehmung ein besonders inniger, insbesondere engerer Kontakt der Verdickung mit der Ausnehmung zustande kommt, der mit einer lokalen plastischen Verformung einhergehen kann, als in dem Bereich des Verbindungsabschnitts außerhalb der Verdickung. Dadurch tritt beim Ultraschallschweißen lokal im Bereich der Verdickung ein höherer Energieeintrag auf und bewirkt dort eine intensive Verbindung.

Bevorzugt weist der Verbindungsabschnitt im Bereich des freien Endes außerhalb der Verdickung einen Einführabschnitt auf. Dadurch, dass der Einführabschnitt einen kleineren Außendurchmesser hat als der Innendurchmesser der Ausnehmung, kann der Verbindungsabschnitt leicht in die Ausnehmung eingeführt werden, wobei der Trägerstift innerhalb des Ringmagnets spielarm geführt und positioniert ist. Anschließend kann die Verdickung unter Einleitung einer hochfrequenten mechanischen Schwingung im Ultraschallbereich weiter in die Ausnehmung eingeführt werden, wodurch eine höhere Krafteinwirkung bewirkt wird, die für eine zuverlässige Verschweißung im Bereich der Verdickung sorgt.

Vom Ende aus gesehen kann sich an die Verdickung ein Führungsabschnitt anschließen, der einen Außendurchmesser wie der zuvor beschriebene Einführungsabschnitt aufweisen kann.

Die Summe aus der Breite der Verdickung, des Einführungsabschnitts und des Führungsabschnitts beträgt - in axialer Richtung gemessen - entspricht vorzugsweise mindestens der Breite des Ringmagnets. Das Verhältnis der Breite der Verdickung zur Breite des Einführungsabschnitts beträgt vorzugsweise etwa 0.8:1 bis 1,5:1, besonders bevorzugt 1:1. Die Breite des Einführungsabschnitts kann sich zur Breite des Führungsabschnitts kann etwa 1:1 betragen.

Der Außendurchmesser der Verdickung kann relativ zum Innendurchmesser ein Übermaß von 0,1 bis 0,4 mm haben, bevorzugt 0,1 bis 0,2 mm.

Bevorzugt ist die Verdickung durch eine Rändelung ausgebildet. Die Rändelung ist eine plastische Materialverformung, bei der in die Außenfläche des Verbindungsabschnitts abwechselnd radial nach innen eingeformte Einprägungen und nach außen radial vorstehende Materialaufwerfungen gebildet werden. Dadurch wird der Außendurchmesser im Bereich der Rändelung, der durch den Hüllkreis der Aufwerfungen gebildet wird, vergrößert zur Bildung der Verdickung.

Dadurch, dass der Hüllkreis der Rändelung einen größeren Außendurchmesser hat, werden die Materialaufwerfungen beim Einführen radial gegen die Innenwand der Ausnehmung gepresst, und unter dem Einfluss der eingeleiteten hochfrequenten mechanischen Schwingungen im Ultraschallbereich mit dem Ringmagneten verschweißt. Ein Vorteil der Rändelung ist, dass dadurch die Verdickung in der geforderten Breite mit geringem Aufwand und in den Abmessungen flexibel erzeugt werden kann.

Es ist weiterhin denkbar und möglich, dass das Trägerteil in eine Ausnehmung der rotierenden Welle eingeführt wird und mit dieser mittels Ultraschallschweißen verbunden ist. Hierbei weist das Trägerteil auch am vom Gebermagneten abgewandten Bereich eine Rändelung auf, sodass eine stoff- und formschlüssige Verbindung zwischen dem Trägerstift und der rotierenden Welle vorliegt.

Es ist weiterhin eine elektromechanische Servolenkung für ein Kraftfahrzeug, umfassend eine zuvor beschriebene Sensoreinrichtung vorgesehen, wobei die Welle eine Lenkwelle der Servolenkung oder eine Rotorwelle eines Elektromotors ist.

Nachfolgend wird ein Ausführungsbeispiel der vorliegenden Erfindung anhand der Zeichnungen beschrieben. Gleiche Bauteile oder Bauteile mit gleichen Funktionen tragen gleiche Bezugszeichen. Es zeigen:

Figur 1: eine schematische Darstellung einer bekannten elektromechanischen Servolenkung;

Figur 2: ein Lenkgetriebe einer Lenkung gemäß Figur 1

Figur 3: eine schematische Darstellung der Montage eines Teils einer Sensoreinrichtung zum Erfassen der Drehlage einer rotierenden Welle in einem ersten Schritt,

Figur 4: eine schematische Darstellung eines zweiten Schritts der Montage,

Figur 5: eine schematische Darstellung eines dritten Schritts der Montage,

Figur 6: eine schematische Darstellung einer ersten Ausführungsform eines Stiftes der Teil der Sensoreinrichtung ist, sowie

Figur 7: eine schematische Darstellung einer zweiten Ausführungsform des Stiftes.

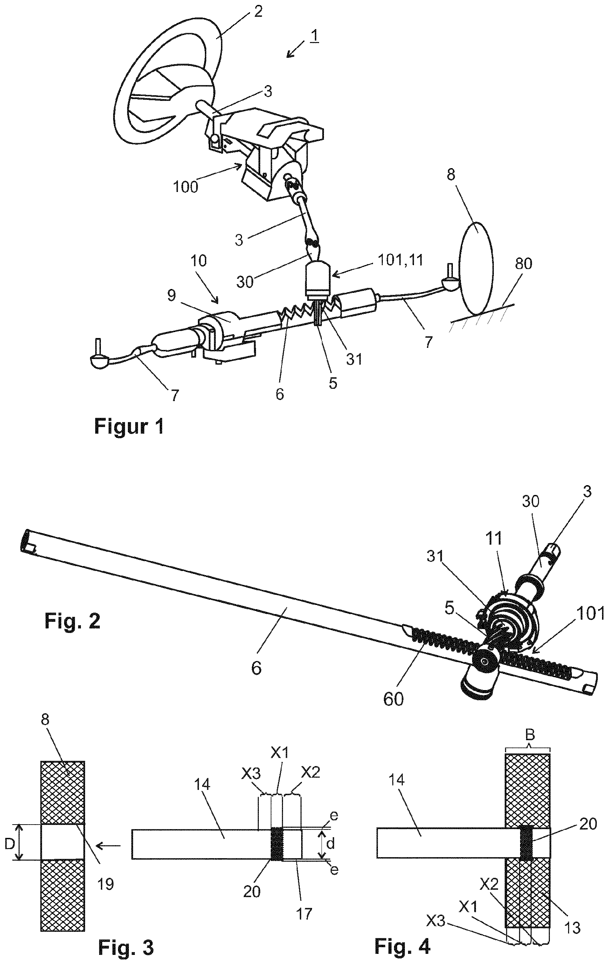

In der Figur 1 ist eine elektromechanische Kraftfahrzeugservolenkung 1 mit einem Lenkrad 2, das mit einer Lenkwelle 3 drehfest gekoppelt ist, schematisch dargestellt. Über das Lenkrad 2 bringt der Fahrer ein entsprechendes Drehmoment als Lenkbefehl in die Lenkwelle 3 ein. Das Drehmoment wird dann über die Lenkwelle 3 auf ein Lenkritzel 5 übertragen.

Das Ritzel 5 kämmt in bekannter Weise mit einem Zahnsegment 60 einer Zahnstange 6. Das Lenkritzel 5 bildet zusammen mit der Zahnstange 6 ein Lenkgetriebe, welches einzeln in Figur 2 dargestellt ist. Die Zahnstange 6 ist in einem Lenkungsgehäuse in Richtung ihrer Längsachse verschieblich gelagert.

An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor 9 mit einem Rotorlagensensor (RPS)einer Servoeinheit 10 ist vorgesehen, um dem Fahrer bei dieser Lenkbewegung zu unterstützen.

Die Lenkwelle 3 weist eine mit dem Lenkrad 2 verbundene Eingangswelle 30 und eine mit dem Lenkritzel 5 verbundene Ausgangswelle 31 auf. Die Eingangswelle 30 und die Ausgangswelle 31 sind drehelastisch über einen nicht gezeigten Drehstab miteinander gekoppelt. Eine Drehmomentsensoreinheit 11, wie in Figur 2 dargestellt, erfasst die Verdrehung der Eingangswelle 30 gegenüber der Ausgangswelle 31 als ein Maß des an der Lenkwelle 3 oder des Lenkrades 2 manuell ausgeübten Drehmomentes. Diese Verdrehung zwischen der Eingangswelle 30 und der Ausgangswelle 31 kann über einen Drehwinkelsensor ermittelt werden. Dieser Drehwinkelsensor wird auch als Drehmomentsensor bezeichnet. Die Drehmomentsensoreinheit 11 weist einen drehfest mit der oberen Lenkwelle 3 verbunden Ringmagneten (Permanentmagneten) und Magnetflussleiter auf. In Abhängigkeit des von der Drehmomentsensoreinheit 11 gemessen Drehmoments stellt die Servoeinheit 10 eine Lenkunterstützung für den Fahrer bereit. Die Servoeinheit 10 kann dabei als Hilfskraftunterstützungseinrichtung 10, 100, 101 entweder mit einer Lenkwelle 3, dem Lenkritzel 5 oder der Zahnstange 6 gekoppelt sein. Die jeweilige Hilfskraftunterstützung 10, 100, 101 trägt ein Hilfskraftmoment in die Lenkwelle 3, das Lenkritzel 5 und/oder in die Zahnstange 6 ein, wodurch der Fahrer bei der Lenkarbeit unterstützt wird. Die drei unterschiedlichen in Figur 1 dargestellten Hilfskraftunterstützungen 10, 100, 101 zeigen alternative Positionen für deren Anordnung. Üblicherweise ist nur eine einzige der gezeigten Positionen mit einer Hilfskraftunterstützung belegt. Die Servoeinheit kann dabei als Überlagerungslenkung an der Lenksäule oder als Hilfskraftunterstützungseinrichtung an dem Ritzel 5 oder der Zahnstange 6 angeordnet sein.

In den Figuren 3 bis 5 ist die Montage eines Teils einer Sensoreinrichtung zur Erfassung der Drehlage einer sich drehenden Welle 12, bevorzugt einer Motorwelle, dargestellt. Die sich drehende Welle kann auch die Eingangswelle 30 oder die Ausgangswelle 31 sein. Die Sensoreinrichtung weist einen Gebermagneten 13, der drehfest mit der Welle 12 verbunden ist, auf. Der Gebermagnet 13 ist an einem Trägerstift 14 befestigt, der in eine Ausnehmung 15 eingesetzt ist, welche in eine Stirnseite 16 der Welle 12 eingebracht ist. Bei dem Gebermagneten 13 handelt es sich um einen Ringmagneten, der auf einem wellenfernen Ende 17 des Trägerstifts 14 sitzt. Der Trägerstift 14 verbindet somit drehfest den Gebermagneten 13 mit der Welle 12, wobei zwischen dem Gebermagneten 13 und der Stirnseite 16 der Welle 12 ein Luftspalt 18 vorhanden ist.

Bei der Montage der Sensoreinrichtung wird in einem ersten Schritt der Trägerstift 14 soweit wie möglich mit einem vordefinierten Anpressdruck auf den Gebermagneten 13 aufgeschoben bis ein Kontakt zwischen einer Aussenfläche des Trägerstifts 14 und einer Innenfläche des Gebermagneten, beispielsweise über eine Rändelung 20 entsteht. Der Ringmagnet 13 weist eine zentrale Ausnehmung 19 auf, die zumindest teilweise kleiner als der Außendurchmesser des Trägerstifts 14 gestaltet ist. Nach dem ersten Aufsetzen des Gebermagneten 13 auf den Trägerstift 14 wird mittels Ultraschallschweißen eine stoffschlüssige Verbindung zwischen dem Gebermagneten 13 und dem Trägerstift 14, wie in Figur 4 dargestellt, hergestellt. Bei diesem Montageschritt werden hochfrequente mechanische Schwingungen im Ultraschallbereich in den Trägerstift 14 eingeleitet, der in Resonanzschwingungen versetzt wird. Der Trägerstift fungiert somit als Sonotrode. Der Frequenzbereich der Resonanzschwingung liegt zwischen 20 und 90 kHz, bevorzugt bei 35 kHz. Die Schwingungsrichtung ist senkrecht zur Fügefläche mit dem Gebermagneten 13 gerichtet, damit die Fügepartner sich aneinander reiben. Der Trägerstift 14 wird dabei mit einem definierten Anpressdruck in den Gebermagneten 13 eingepresst. Durch die Grenzflächenreibung bei definiertem Anpressdruck wird der Gebermagnet 13 an der Berührungsfläche mit dem Trägerstift 14 lokal erwärmt, aufgeschmolzen und dadurch plastisch verformbar. Durch Fortsetzung des Drucks sinkt der Trägerstift 14 in die bevorzugt als Bohrung ausgeführte Ausnehmung 19 ein. Vorzugsweise weist der Gebermagnet 13 in seiner Magnetzusammensetzung einen Kunststoffanteil auf. Der Trägerstift 14 ist bevorzugt aus Metall hergestellt. Durch das Ultraschallschweißen verbindet sich der Trägerstift 14 somit mit dem Gebermagneten 13 stoff- und formschlüssig. Anschließend wird der Trägerstift 14 mit dem darauf angeordneten Gebermagneten 13 mit der Welle 12 verbunden.

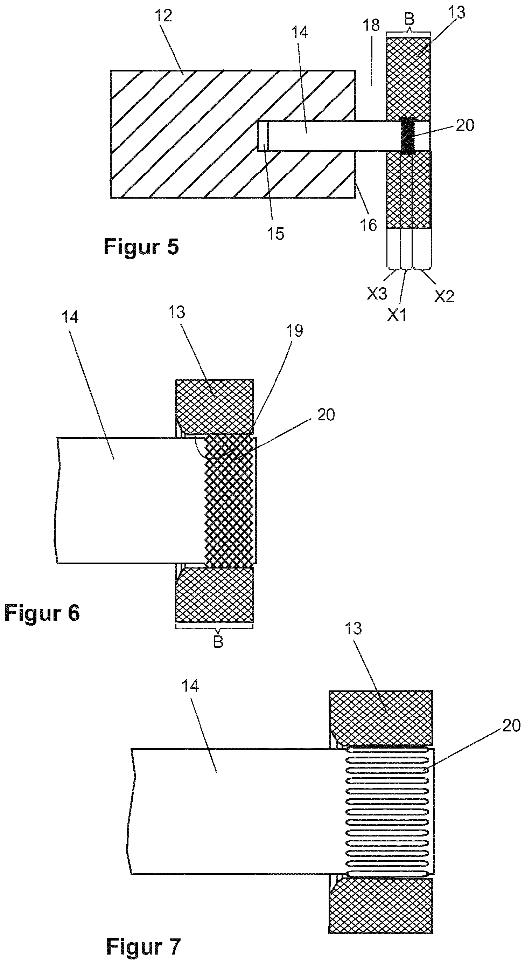

In einer bevorzugten Ausführungsform weist das in den Gebermagneten 13 einzubringende Ende des Trägerstiftes 14 auf der Außenseite eine Rändelung 20 auf. Im Gegensatz dazu ist die Oberfläche der Ausnehmung 19 des Gebermagneten 13 bevorzugt eben oder glatt ausgestaltet. Wie in den Figuren 6 und 7 dargestellt, kann diese Rändelung beispielsweise eine Kreuzrändelung (Figur 6) oder eine Längsrändelung (Figur 7) sein. Bei der Montage oder dem Ultraschallschweißen umfließt die aufgeschmolzene Masse des Gebermagneten 13 die Hinterschneidungen der Rändelung 20, sodass nach dem Abkühlen eine form- und stoffschlüssige Verbindung zwischen dem Gebermagneten 13 und dem Trägerstift 14 entsteht.

Der Gebermagnet 13 hat in axialer Richtung gemessen eine Breite B, innerhalb der er auf dem Trägerstift 14 sitzt. Im Bereich des wellenfernen Endes befindet sich ein Einführungsabschnitt, der eine Breite X2 hat, an den sich eine Verdickung mit der Breite X1 anschließt, welche im gezeigten Beispiel als Rändelung 20 ausgebildet ist. An die Rändelung 20 schließt sich in Richtung auf die Welle 12 zu ein Führungsabschnitt an, der mit seiner Breite X3 bezeichnet ist. Die Summe der Breiten X1, X2 und X3 entspricht im Wesentlichen der Breite B des Gebermagnets 13, welche der Breite eines Verbindungsabschnitts des Trägerstifts 14 entspricht.

Die Ausnehmung 19 des Gebermagnets 13 hat einen Innendurchmesser D. Im Bereich des Einführungsabschnitts X2 und des Führungsabschnitts X3 hat der Trägerstift 14 einen Außendurchmesser d, der vorzugsweise kleiner ist als der Innendurchmesser D. Im Bereich der Rändelung 20 werden durch die plastische Materialverdrängung radiale Materialaufwerfungen der Höhe e erzeugt, wie in Figur 3 dargestellt, so dass die Rändelung 20 eine Verdickung mit einem vergrößerten Durchmesser (d+2 x e) bildet, wobei gilt:

$$d + 2 \times e \geq D.$$

Mit dem Einführungsabschnitt X2 kann der Trägerstift 14 leicht und exakt in die Ausnehmung 19 eingeführt werden, und im Bereich der Rändelung 20 erfolgt wie vorangehend beschrieben die Ultraschallverschweißung.

Bei der drehenden Welle 12 kann es sich beispielsweise um eine Rotorwelle des Elektromotors 9 handeln. Der Elektromotor weist in einem Gehäuse einen gehäusefesten Stator sowie eine rotierend gelagerte Rotorwelle auf, deren Drehlage mithilfe einer Sensoreinrichtung (Rotorpositionssensor) detektiert wird. Die Sensoreinrichtung umfasst den Gebermagneten 13, der drehfest mit der Rotorwelle 12 verbunden ist, sowie einen gehäusefest angeordneten Sensor, der Magnetfeldänderungen zu detektieren in der Lage ist, welche beim Umlaufen der Rotorwelle sowie des Gebermagneten entstehen. Die entsprechenden Sensorsignale des Sensors werden in einer Regel- oder Steuereinheit ausgewertet und können zur Einstellung des Elektromotors herangezogen werden. Bei dem Sensor handelt es sich zum Beispiel um einen AMR-Sensor (anisotroper magnetoresistiver Effekt) oder um einen Hall-Sensor.

Es kann sich bei der drehenden Welle 12 aber auch um eine Lenkwelle handeln, wobei der Gebermagnet 13 Teil der Drehmomentsensoreinheit 11 ist.

**Patentansprüche**

1. Sensoreinrichtung zum Erfassen der Drehlage einer rotierenden Welle (12), die in einem Gehäuse drehbar gelagert ist, mit einem Gebermagneten (13), der auf einem Trägerteil (14) befestigt ist, das mit der Welle (12, 30, 31) verbunden ist, wobei das Trägerteil (14) ein Trägerstift ist und der Gebermagnet (13) ringförmig ausgebildet ist und den Trägerstift (14) umschließt, **dadurch gekennzeichnet, dass** der Gebermagnet (13) eine zentrale Ausnehmung aufweist, die zumindest teilweise kleiner als der Außendurchmesser des Trägerteils (14) ist und das Trägerteil (14) in die Ausnehmung des Gebermagneten (13) eingesetzt ist und mittels Einpressen und Ultraschallschweißen stoff- und formschlüssig verbunden ist.

2. Sensoreinrichtung nach Anspruch 1, **dadurch gekennzeichnet, dass** das Trägerteil (14) als Sonotrode während des Ultraschallschweißens verwendbar ist.

3. Sensoreinrichtung nach einem der vorhergehenden Ansprüche, **dadurch gekennzeichnet, dass** das Trägerteil (14) auf der Außenseite eine Rändelung (20) aufweist.

**4.** Sensoreinrichtung nach Anspruch 3, **dadurch gekennzeichnet, dass** die Rändelung (20) eine Kreuz- oder Längsrändelung ist.

**5.** Verfahren zur Montage einer Sensoreinrichtung zum Erfassen der Drehlage einer rotierenden Welle (12, 30, 31), die in einem Gehäuse drehbar gelagert ist, mit einem Gebermagneten (13), der auf einem Trägerteil (14), welches ein Trägerstift ist, befestigbar ist, das mit der Welle (12) verbindbar ist, wobei der Gebermagnet (13) ringförmig ausgebildet ist und den Trägerstift (14) umschließt, **dadurch gekennzeichnet, dass** das Verfahren folgende Schritte aufweist:

- Teilweises Einbringen des Trägerteils (14) in eine zentrale Ausnehmung des Gebermagneten (13), die zumindest teilweise kleiner als der Außendurchmesser des Trägerstiftes ist, mit einem definierten Anpressdruck,
- Einleiten einer hochfrequenten mechanischen Schwingung im Ultraschallbereich in das Trägerteil (14),
- Einpressen des Trägerteils (14) in den Gebermagneten (13) mit einem definierten Anpressdruck, derart, dass der Trägerstift in die zentrale Ausnehmung einsinkt und sich dadurch mit dem Magneten (13) stoff- und formschlüssig verbindet,
- Einbringen des Trägerteils (14) in die Welle (12, 30, 31).

**6.** Verfahren nach Anspruch 5, **dadurch gekennzeichnet, dass** die hochfrequente Schwingung in einem Bereich von 20 bis 40 kHz liegt.

**7.** Verfahren nach Anspruch 5 oder 6, **dadurch gekennzeichnet, dass** die hochfrequente Schwingung bei etwa 35 kHz liegt.

**8.** Verfahren nach einem der vorhergehenden Ansprüche 5 bis 7, **dadurch gekennzeichnet, dass** der Gebermagnet (13) in seiner Zusammensetzung Kunststoff aufweist und dass bei dem Einleiten der hochfrequenten mechanischen Schwingung in das Trägerteil (14) der Magnet (13) teilweise erwärmt und plastifiziert wird.

**9.** Verfahren nach einem der vorhergehenden Ansprüche 5 bis 8, **dadurch gekennzeichnet, dass** das Trägerteil (14) auf der Außenseite eine Rändelung (20) aufweist und der plastifizierte Gebermagnet (13) Hinterschneidungen der Rändelung (20) umfließt, sodass nach dem Abkühlen eine form- und stoffschlüssige Verbindung zwischen dem Gebermagneten (13) und dem Trägerstift (14) entsteht.

**10.** Elektromechanische Servolenkung (1) für ein Kraftfahrzeug, umfassend eine Sensoreinrichtung nach einem der Ansprüche 1 bis 4, wobei die Welle (12, 30, 31) eine Lenkwelle der Servolenkung ist.

**11.** Elektromechanische Servolenkung (1) für ein Kraftfahrzeug, umfassend eine Sensoreinrichtung nach einem der Ansprüche 1 bis 4, wobei die Welle (12, 30, 31) eine Rotorwelle eines Elektromotors (9) ist.

**Claims**

**1.** Sensor device for the detection of the rotary position of a rotating shaft (12) which is mounted rotatably in a housing, with a transmitter magnet (13) which is fastened on a carrier part (14) which is connected to the shaft (12, 30, 31), the carrier part (14) being a carrier pin, and the transmitter magnet (13) being of annular configuration and enclosing the carrier pin (14), **characterized in that** the transmitter magnet (13) has a central recess which is at least partially smaller than the external diameter of the carrier part (14), and the carrier part (14) is inserted into the recess of the transmitter magnet (13) and is connected in an integrally joined and positively locking manner by means of pressing in and ultrasonic welding.

**2.** Sensor device according to Claim 1, **characterized in that** the carrier part (14) can be used as a sonotrode during the ultrasonic welding.

**3.** Sensor device according to either of the preceding claims, **characterized in that** the carrier part (14) has a knurled portion (20) on the outer side.

**4.** Sensor device according to Claim 3, **characterized in that** the knurled portion (20) is a cross or longitudinal knurled portion.

**5.** Method for the assembly of a sensor device for the detection of the rotary position of a rotating shaft (12, 30, 31) which is mounted rotatably in a housing, with a transmitter magnet (13) which can be fastened on a carrier part (14) which is a carrier pin and can be connected to the shaft (12), the transmitter magnet (13) being of annular configuration and enclosing the carrier pin (14), **characterized in that** the method has the following steps:

- partial insertion of the carrier part (14) into a central recess of the transmitter magnet (13), which central recess is at least partially smaller than the external diameter of the carrier pin, with a defined contact pressure,
- introduction of a high-frequency mechanical oscillation in the ultrasonic range into the carrier part (14),
- pressing of the carrier part (14) into the transmitter magnet (13) by way of a defined contact pressure, in such a way that the carrier pin sinks into the central recess and is connected in an integrally joined and positively locking manner to the magnet (13) as a result,
- introduction of the carrier part (14) into the shaft (12, 30, 31).

6. Method according to Claim 5, **characterized in that** the high-frequency oscillation lies in a range from 20 to 40 kHz.

7. Method according to Claim 5 or 6, **characterized in that** the high-frequency oscillation lies at approximately 35 kHz.

8. Method according to one of the preceding Claims 5 to 7, **characterized in that** the transmitter magnet (13) comprises plastic in its composition, and **in that**, in the case of the introduction of the high-frequency mechanical oscillation into the carrier part (14), the magnet (13) is partially heated and plasticized.

9. Method according to one of the preceding Claims 5 to 8, **characterized in that** the carrier part (14) has a knurled portion (20) on the outer side, and the plasticized transmitter magnet (13) flows around undercuts of the knurled portion (20), with the result that, after cooling, a positively locking and integrally joined connection is produced between the transmitter magnet (13) and the carrier pin (14).

10. Electromechanical power steering system (1) for a motor vehicle, comprising a sensor device according to one of Claims 1 to 4, the shaft (12, 30, 31) being a steering shaft of the power steering system.

11. Electromechanical power steering system (1) for a motor vehicle, comprising a sensor device according to one of Claims 1 to 4, the shaft (12, 30, 31) being a rotor shaft of an electric motor (9).

**Revendications**

1. Dispositif capteur destiné à détecter la position de rotation d'un arbre (12) en rotation, qui est monté à rotation dans un boîtier, comprenant un aimant transmetteur (13) qui est fixé sur une partie porteuse (14), laquelle est reliée à l'arbre (12, 30, 31), la partie porteuse (14) étant une broche porteuse et l'aimant transmetteur (13) étant de configuration annulaire et entourant la broche porteuse (14), **caractérisé en ce que** l'aimant transmetteur (13) possède un creux central qui est au moins partiellement plus petit que le diamètre extérieur de la partie porteuse (14) et la partie porteuse (14) étant introduite dans le creux de l'aimant transmetteur (13) et reliée par fusion de matières et complémentarité de formes au moyen de l'enfoncement et du soudage par ultrasons.

2. Dispositif capteur selon la revendication 1, **caractérisé en ce que** la partie porteuse (14) peut être utilisée comme une sonotrode pendant le soudage par ultrasons.

3. Dispositif capteur selon l'une des revendications précédentes, **caractérisé en ce que** la partie porteuse (14) présente un moletage (20) sur le côté extérieur.

4. Dispositif capteur selon la revendication 3, **caractérisé en ce que** le moletage (20) est un moletage croisé ou longitudinal.

5. Procédé de montage d'un dispositif capteur destiné à détecter la position de rotation d'un arbre (12, 30, 31) en rotation, qui est monté à rotation dans un boîtier, comprenant un aimant transmetteur (13) qui peut être fixé sur une partie porteuse (14), laquelle est une broche porteuse et qui peut être reliée à l'arbre (12), l'aimant transmetteur (13) étant de configuration annulaire et entourant la broche porteuse (14), **caractérisé en ce que** le procédé comprend les étapes suivantes :

- introduction partielle de la partie porteuse (14) dans un creux central de l'aimant transmetteur (13), lequel est au moins partiellement plus petit que le diamètre extérieur de la broche porteuse, avec une pression de pressage définie,
- initiation d'une oscillation mécanique à haute fréquence dans la plage des ultrasons dans la partie porteuse (14),
- enfoncement de la partie porteuse (14) dans l'aimant transmetteur (13) avec une pression de pressage définie de telle sorte que la broche porteuse s'enfonce complètement dans le creux central et soit ainsi reliée par fusion de matières et complémentarité de formes à l'aimant (13),
- introduction de la partie porteuse (14) dans l'arbre (12, 30, 31).

6. Procédé selon la revendication 5, **caractérisé en ce que** l'oscillation à haute fréquence se situe dans une plage de 20 à 40 kHz.

7. Procédé selon la revendication 5 ou 6, **caractérisé en ce que** l'oscillation à haute fréquence est approximativement de 35 kHz.

8. Procédé selon l'une des revendications précédentes 5 à 7, **caractérisé en ce que** l'aimant transmetteur (13) présente, dans sa composition, une matière plastique et **en ce que** lors de l'initiation de l'oscillation mécanique à haute fréquence dans la partie porteuse (14), l'aimant (13) est partiellement échauffé et plastifié.

9. Procédé selon l'une des revendications précédentes 5 à 8, **caractérisé en ce que** la partie porteuse (14) possède un moletage (20) sur le côté extérieur et l'aimant transmetteur (13) plastifié s'écoule autour de contre-dépouilles du moletage (20), de sorte qu'après le refroidissement, il se produit une liaison par fusion de matières et complémentarité de formes entre l'aimant transmetteur (13) et la broche porteuse (14).

10. Direction assistée électromécanique (1) pour un véhicule automobile, comprenant un dispositif capteur selon l'une des revendications 1 à 4, l'arbre (12, 30, 31) étant un arbre de direction de la direction assistée.

11. Direction assistée électromécanique (1) pour un véhicule automobile, comprenant un dispositif capteur selon l'une des revendications 1 à 4, l'arbre (12, 30, 31) étant un arbre de rotor d'un moteur électrique (9).

**Figur 1**

**Fig. 2**

**Fig. 3**

**Fig. 4**

**Figur 5**

**Figur 6**

**Figur 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2350573 B1
- DE 102014018783A1
- DE 102013015452 A1
- EP 2594915 A2